# EUROPEAN PATENT APPLICATION

(11) **EP 1 677 068 A1**
(43) Date of publication of application: **05.07.2006**
(21) Application number: 05112985.6
(22) Date of filing: 27.12.2005
(51) Int. Cl.: G01B 7/14, G05D 1/02, G01D 5/14

(54) **Sensor alignment device**

(30) Priority: 30.12.2004 SE 4032140
(71) Applicant: Daprox AB, 127 23 Skärholmen (SE)
(72) Inventor: Åkerblom, Bengt, 143 40, VÅRBY (SE)
(74) Representative: Winblad, Hans Peter

(57) **Abstract**

The invention relates to alignment of a sensor (2) mounted in a sensor mount (12) . A sensor body (4) that is suspended in a housing (6) has a first part with a sensor head (8) and a second part that is in the form of a core (10) and is surrounded by a coil (14). The coil (14) is activated by an electrical current so that electromagnetic fields (18) are generated and reading devices (16) are arranged around the core (10) for measuring the field intensity H of the electromagnetic fields (18) that are generated. A control unit (22) is arranged to evaluate measurement values for the field intensity H and to generate signals (24) that are representative of the position of the core (10) in relation to the housing (6), and in that a memory (20) is arranged to store the signals (24) as reference values H. Changes of position of the sensor body (4) in a lateral direction are compensated for in relation to the sensor mount (12), so that a centred position at an unchanged distance S-desired_{x,y,z} can be maintained by the sensor head (8) in relation to a given area (17) of an object to be measured (11).

## Description

The present invention relates to a method and a device for alignment of a sensor of the type that is described in the preamble to the independent claims.

The use of electromagnetic fields for position determination of the angular position of a sensor by measuring a voltage generated by the electromagnetic field in one or more coils is already known through US-A-4 829 247.

Carrying out position determination of the axial position of, for example, a valve rod, by means of a device that measures the field intensity of a magnetic field generated by an axially magnetized magnetic casing (permanent magnet) is already known through US-A1-2002/0125884.

A sensor arrangement for detecting the position of a rod that is movable in relation to a fixed point is already known through WO 95/15478. Magnetic sensors are arranged around the rod, which detect the intensity of a magnetic field at the surface of the adjacent rod and send electrical signals that are proportional to the intensity of the magnetic field. The signals are sent to a processing device and are compared there with a type example that represents specific positions of the rod.

According to the invention, on the other hand, unlike the known techniques described above, alignment is carried out of a previously known sensor of the type described in the introduction. Such a sensor can be arranged for measuring the characteristics of different objects, for example web thicknese or the thickness of a layer on a web that runs over a roller. The sensor can be designed with a sensor body, with the part of the body that faces towards the object having a sensor head that comprises a sensor that is intended to carry out measurements using the reluctance principle.

A sensor of this type can be suspended by air bearings in a sensor housing that, in turn, is mounted in an advantageous way in an adjustable sensor mount that is, for example, provided with a balancing device, and operates in accordance with the "air cushion principle", that is a gas, for example compressed air, can be admitted through an inlet and distributed to the respective air bearings and to a duct arranged centrally in the sensor body. From the duct, the compressed air is blown out towards the object to be measured, for example a web of paper or sheet metal, forming an air cushion between the object to be measured and the end of the sensor body. At the same time, a pressure arises against a stop that is arranged at the end of the duct facing away from the web, whereby a lifting force is generated in the direction away from the web. In addition, air that leaves the air bearing can flow into a chamber arranged around the upper part of the sensor body and acts against the stop and this upper part of the sensor body. A throttle valve can be arranged in the chamber, by means of which it is possible to balance the force, that is the pressure that is exerted by the sensor body towards the web via the air cushion, to very low values. It is then possible to achieve pressure values that correspond to a weight as low as approx 0-320 g/cm². At such low values, there is normally no detectable deformation of the web.

In a sensor balanced in this way, the sensitivity of the sensor for alignment increases, as it is vital that the surface of the sensor head facing towards the web, that can "float" at a predetermined distance from the web by means of the air cushion, has a profile that corresponds to the surface of the web. This applies in particular for measuring a web that runs over a cambered roller, where the surface of the sensor head that faces towards the web has a concave profile corresponding to the camber. In addition, it is vital that the predetermined distance from the web can be kept essentially constant. A small displacement of the sensor head in a lateral or vertical direction results in a change in the nature of the air cushion, which can cause unacceptable variations in the measurement values in question and, in the worst case, can result in the sensor head coming into contact with the web. This can cause damage both to the web and to the sensor head.

An object of the invention is therefore to achieve a method and a device for alignment of a sensor in air bearings. This is possible with a system that has the characteristics described in the following patent claims.

Examples of embodiments of a method and a system according to the invention are described in greater detail in the following, with reference to the attached schematic drawings.

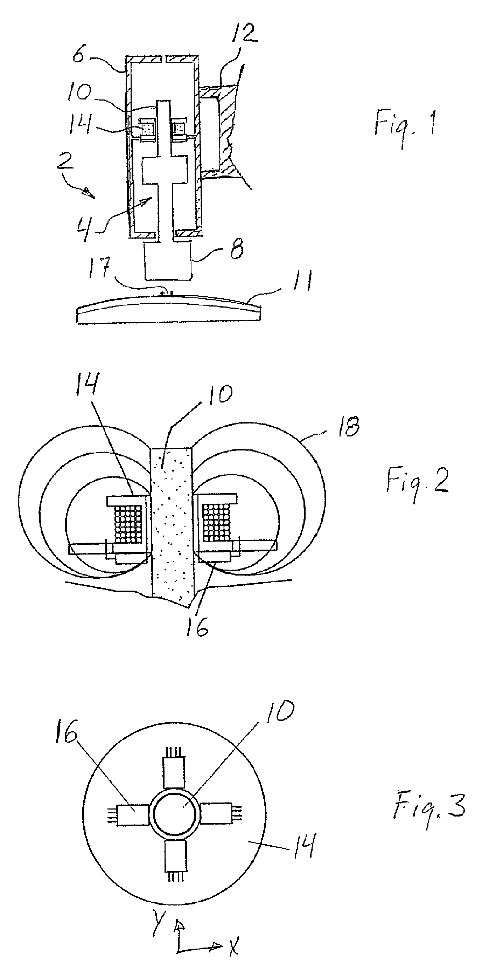

Figure 1 shows a vertical view of a sensor of the type in question in partial cross section, comprising a sensor body suspended in a sensor housing, that has a first part with a sensor head and a second part that is in the form of a core and is surrounded by a coil and reading devices,
Figure 2 shows the core surrounded by the coil and reading devices according to Figure 1 in larger scale in a centred ideal position and with magnetic flow lines,
Figure 3 shows a horizontal view of Figure 2 viewed from below,

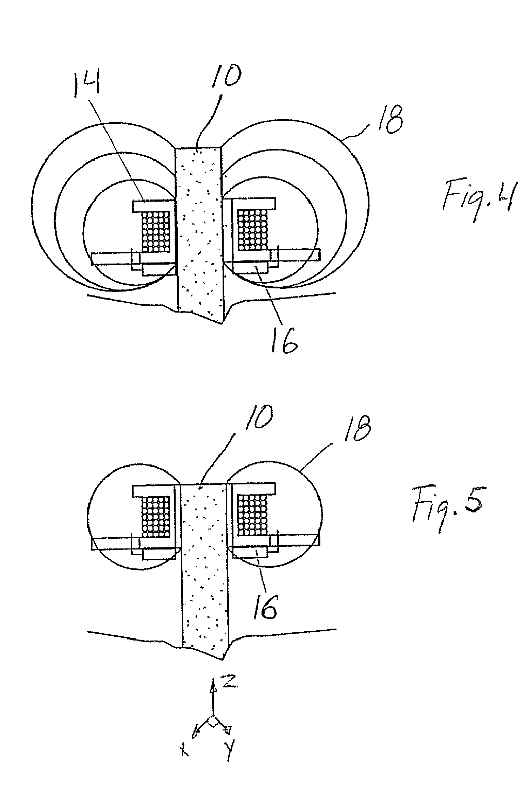

Figure 4 shows the core according to Figure 2 in an off-centre undesirable position,
Figure 5 shows the principle for measuring the height of the sensor using the core according to Figure 2, and

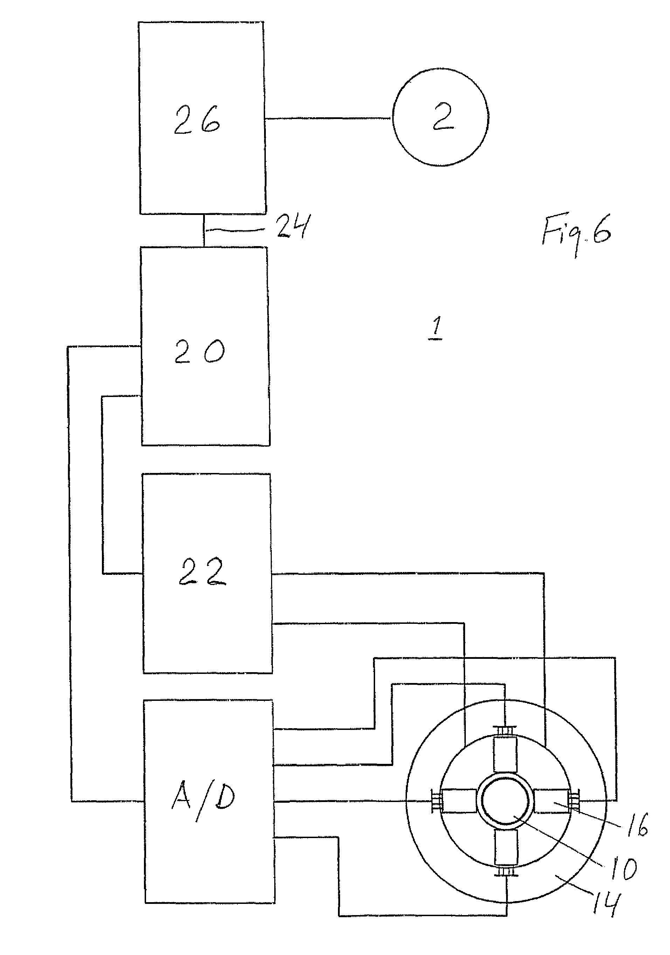

Figure 6 shows a block diagram for a system for carrying out the method according to the invention.

The invention relates to a system 1 for alignment of a sensor 2, comprising an elongated sensor body 4 that is mounted with an air bearing in relation to a surrounding housing 6. Examples of sensors of the type described in the introduction and such a sensor that is mounted with an "air bearing" are already described in detail in the Swedish patent 515 644 and in the Swedish patent application 0401372-8 and will therefore not be described here in greater detail. A sensor head 8 is arranged at the end of a first part of the sensor body 4 and a second part of the sensor body at the opposite end to the sensor head 8 forms a core 10 in the form of a rod made of material that can be magnetized. The first part of the sensor body 4 faces with the sensor head 8 towards an object to be measured 11, for which purpose it is desirable for the sensor head 8 to be positioned precisely in relation to the object to be measured 11. This can be achieved by continually determining the position of the sensor body 4 that is mounted with an air bearing in relation to its surrounding housing 6, using the simple principle of measuring the centring of the sensor body 4 and its vertical position in the housing 6.

In other words, it is possible to detect deviations from an ideal position S-deeired_{x,y,z} of the sensor body ₄ in several planes, such as displacement in an axial direction and in a lateral direction of the sensor body 4 in relation to its suspension device, that is the housing 6 and a sensor mount 12 supporting the housing. The detection of deviations of the sensor body 4 can, for example, be carried out by detecting the changes that the deviations cause in a magnetic field generated in the sensor body 4 or in the magnetic core 10. The core 10 can either consist of the rod-shaped second part of the sensor body 4 or an extension of the same along its axial line. Alternatively, the extension can be made of corresponding material in the form of a pin with a smaller diameter, that forms the core 10 instead. For this purpose, the core is surrounded by or extends through a coil 14 arranged in the housing 6. Reading devices 16 of a known type in the form of magneto-resistive elements or Hall elements can be arranged in the housing 6 around the core 10. In the embodiment shown, four reading devices 16 are arranged spaced evenly (at 90°) around the core. Instead of four reading devices, it is also possible instead to arrange only three reading devices 16 at a spacing of 120°, or any number of reading devices 16 at a corresponding spacing around the core 10. With such an arrangement, the position of the core 10 in relation to the reading devices 16 can be determined both laterally and vertically, and consequently the position of the sensor head 8 can thereby be determined in relation to a given area 17 on the object to be measured 11.

The second part of the sensor body 4 can thus be designed as described above as a core 10 in the form of a rod made of suitable material that can be magnetized, which is surrounded by the coil 14. By passing a current through the coil 14, an electromagnetic field 18 arises around the coil. Reading devices 16 that are arranged around the core 10 can thereby measure the field intensity H of the electromagnetic field 18, which values of H are sent to a computer device 20 in a control unit 22, which computer device is provided with a memory. Changes of position of the core 10 cause changes in the field intensity H and, by detecting these changes dH in the field intensity, both horizontal and vertical changes of position of the sensor body 4 can be detected.

After the values dH sent from the reading devices 16 have been evaluated in the computer device 20 of the control unit 22, which can, in turn, send control signals 24 to a control device 26 that is preferably co-ordinated with the sensor mount 12, the lateral and vertical position of the sensor can be adjusted to an optimal centred position S-desired_{x,y,z} for the best possible measurement results. Alternatively, by setting a limit value Dₘₐₓ for the changes of position, a warning message can be transmitted if the changes of position exceed this limit value.

The detection can also be carried out by some other type of detection of changes in values that are caused by changes in the position of the sensor body 4, for example by optical detection.

An example of a sensor of the type described in the introduction and such a sensor that is mounted with an "air bearing" is already described in detail in the Swedish patent 515 644 and in the Swedish patent application 0401372-8 and will therefore not be described here in greater detail.

## Claims

1. Method for alignment of a sensor (2) mounted in a sensor mount (12), which sensor comprises a sensor body (4) suspended in a housing (6), which sensor body has a first part with a sensor head (8) and a second part that is in the form of a core (10) and is surrounded by a coil (14), **characterized by** the following steps:
a) an electrical current is passed through the coil (14) so that electromagnetic fields (18) arise around the coil,
b) reading devices (16) are arranged around the core (10) for measuring the field intensity H of the electromagnetic fields (18) generated around the coil,
c) measurement values for the field intensity H are sent to a control unit (22) for evaluation,
d) signals (24) are generated in the control unit (22) that are representative of the position of the core (10) in relation to the housing (6),
e) the signals (24) are stored as reference values H in a memory (20),
f) the signals (24) are utilized for operating a control device (26) that is co-ordinated with the sensor mount (12),
g) the sensor mount (12) is adjusted to compensate for changes of position of the sensor body (4) in a lateral direction, so that an optimally centred position S-desired_{x,y} is maintained by the sensor head (8) in relation to a given area (17) of an object to be measured (11).

2. Method according to Claim 1, **characterized by** the following step:
h) the sensor mount (12) is adjusted to compensate for changes of position of the sensor body (4) in a vertical direction, so that the sensor head (8) is maintained at an optimal distance S-desired_{z} from the object to be measured (11).

3. Method according to Claim 1 or 2, **characterized by** the following steps:
i) signals (24) are generated that are proportional to the size of the detected changes dH in the field intensity, which signals are compared with the signals (24) that are stored in the memory as reference values H,
j) the deviation of the sensor (2) from a predetermined position in relation to the housing (6) is indicated by detecting the size of the changes dH in the field intensity.

4. Method according to any one of Claims 1-3, **characterized by** the following step:
k) the signals (24) are sent to a computer device (20) arranged in the control unit (22), which computer device compares the pattern of the actual values of the signals with the pattern for the previously stored desired signal values, that represent specific positions S-desired_{x,y,z} for the sensor head (8).

5. System for alignment of a sensor (2) mounted in a sensor mount (12), which sensor comprises a sensor body (4) suspended in a housing (6), which sensor body has a first part with a sensor head (8) and a second part that is in the form of a core (10) and is surrounded by a coil (14), **characterized in that** the coil (14) is activated by an electrical current in such a way that electromagnetic fields (18) are generated, **in that** reading devices (16) are arranged around the core (10) for measuring the field intensity H of the electromagnetic fields (18) that are generated, **in that** a control unit (22) is arranged to evaluate the measurement values for the field intensity H and to generate signals (24) that are representative of the position of the core (10) in relation to the housing (6), and **in that** a memory (20) is arranged to store the signals (24) as reference values H.

6. System according to Claim 5, **characterized in that** a control device (26) coordinated with the sensor mount (12) is arranged to be operated by signals (24) that are proportional to the size of detected changes dH in the field intensity, which signals are compared with the signals (24) that are stored as reference values H in the memory.

7. System according to Claim 5 or 6, **characterized in that** the sensor mount (12) is arranged to compensate for changes of position of the sensor body (4) in a lateral direction, so that an optimally centred position S-desired_{x,y} is maintained by the sensor head (8) in relation to a given area (17) of an object to be measured (11).

8. System according to Claims 5 - 7, **characterized in that** the sensor mount (12) is arranged to be adjusted to compensate for changes of position of the sensor body (4) in a vertical direction, so that the sensor head (8) is maintained at an unchanged distance S-desired_{z} from the object to be measured (11).

9. System according to any one of Claims 5 - 8, **characterized in that** a computer device (20) is arranged in the control unit (22), which computer device is arranged to compare the pattern for the actual values of the signals (24) with the pattern for the previously stored desired signal values, that represent specific positions S-desired_{x,y,z} of the sensor head (8).
